(19) **Europäisches Patentamt**
**European Patent Office**
**Office européen des brevets**

(11) **EP 4 773 282 A1**

(12) **EUROPEAN PATENT APPLICATION**
published in accordance with Art. 153(4) EPC

(43) Date of publication:
08.07.2026 Bulletin 2026/28

(51) International Patent Classification (IPC):
*H01M 10/0525* (2010.01)    *H01M 50/474* (2021.01)
*H01M 50/483* (2021.01)    *H01M 50/486* (2021.01)

(21) Application number: 25858585.0

(22) Date of filing: 25.06.2025

(52) Cooperative Patent Classification (CPC):
Y02E 60/10; Y02P 70/50

(86) International application number:
PCT/CN2025/103413

(87) International publication number:
WO 2026/045537 (05.03.2026 Gazette 2026/10)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: 02.09.2024 CN 202411223133

(71) Applicant: **Ningde Amperex Technology Limited**
**Ningde, Fujian 352100 (CN)**

(72) Inventor: **YE, Ying**
**Ningde, Fujian 352100 (CN)**

(74) Representative: **Kraus & Lederer PartGmbB**
**Thomas-Wimmer-Ring 15**
**80539 München (DE)**

(54) **SECONDARY BATTERY, MANUFACTURING METHOD FOR SECONDARY BATTERY, AND ELECTRICAL APPARATUS**

(57) This application relates to the technical field of energy storage, and specifically discloses a secondary battery, a secondary battery manufacturing method, and an electrical device. The secondary battery includes an electrode assembly. The electrode assembly includes a first electrode plate, a second electrode plate, a separator, and a filler. The first electrode plate includes a first current collector and a first active material layer. The second electrode plate includes a second current collector and a second active material layer. The separator is disposed between the first active material layer and the second active material layer. The first active material layer is provided with a groove. The groove includes a groove opening and a groove wall. Another side of the separator facing the groove opening corresponds to the second active material layer. The filler includes a filling portion. The filling portion is located in the groove. The filling portion covers at least a part of the groove wall. The filler can separate the separator from lithium dendrites deposited in the groove, and limit the growth of lithium dendrites in the groove toward the separator, thereby hindering the lithium dendrites from piercing the separator.

FIG. 1

## Description

### TECHNICAL FIELD

This application relates to the technical field of energy storage, and in particular, to a secondary battery, a secondary battery manufacturing method, and an electrical device.

### BACKGROUND

In the design of secondary batteries, an energy density may be increased by increasing the coating weight of an active material layer on an electrode plate. However, after the weight of the active material layer applied to the electrode plate is increased, an electrolyte solution can hardly infiltrate the electrode plate, and the active material layer needs to be perforated to improve the infiltration effect of the electrolyte solution for the electrode plate.

### SUMMARY

In a groove formed by perforating the active material layer, the lithium-ion transmission path is long, and the local current density is high, thereby being prone to generate lithium dendrites. Moreover, without being hindered by the separator, the lithium dendrites in the groove grow in a free state, thereby being prone to pierce the separator and cause safety hazards.

In view of this, it is necessary to provide a secondary battery, a secondary battery manufacturing method, and an electrical device to help reduce the risk of the separator being pierced by lithium dendrites.

According to a first aspect, an embodiment of this application provides a secondary battery. The secondary battery includes an electrode assembly. The electrode assembly includes a first electrode plate, a second electrode plate, and a separator. The first electrode plate includes a first current collector and a first active material layer. The first active material layer is disposed on at least one surface of the first current collector along a thickness direction of the first current collector. The second electrode plate includes a second current collector and a second active material layer. The second active material layer is disposed on at least one surface of the second current collector along a thickness direction of the second current collector. The separator is disposed between the first active material layer and the second active material layer. The first active material layer is provided with a groove. The groove includes a groove opening and a groove wall. Along a thickness direction of the first electrode plate, the groove opening faces toward the separator. Another side of the separator corresponds to the second active material layer, the other side being opposite to one side facing the groove opening. The first electrode plate further includes a filler. The filler includes a filling portion. The filling portion is located in the groove. The filling portion covers at least a part of the groove wall.

In the above embodiment, when lithium dendrites are deposited in the groove, the filler in the groove can separate the separator from the lithium dendrites deposited in the groove, and limit the growth of lithium dendrites in the groove toward the separator, thereby hindering the lithium dendrites from piercing the separator. When the lithium dendrites deposited on the first active material layer come into contact with the filler, the filler can also apply a pressure to the lithium dendrites. In this way, the lithium dendrites are less prone to generate sharp free-growth ends, thereby reducing the risk of the lithium dendrites piercing the separator, and improving the safety of the secondary battery in use.

In one or more of the above embodiments, the filler is made of a material including at least one of a ceramic material or a resin material.

In the above embodiments, on the one hand, the ceramic material and the resin material provide support, and can suppress lithium dendrite growth. On the other hand, the ceramic material and the resin material are of high porosity, and lithium ions can pass through the pores, thereby reducing the impact on lithium-ion transport. In addition, the ceramic material and the resin material are insulative, and can achieve a trade-off between the electrolyte infiltration effect and the safety performance of the secondary battery.

In one or more of the above embodiments, the ceramic material is at least one selected from aluminum oxide, boehmite, titanium oxide, magnesium oxide, calcium oxide, or zirconium oxide.

In one or more of the above embodiments, the resin material is at least one selected from polyimide, polytetrafluoroethylene, or polyvinyl butyral.

In one or more of the above embodiments, the material of the filler further includes a binder.

In the above embodiments, the binder can improve the adhesion between the filler and the active material layer, thereby making it convenient to cure the filling portion in the groove, and more effectively suppressing the growth of lithium dendrites in the groove.

In one or more of the above embodiments, an internal space volume of the groove is $V_1$, and a volume of the filling portion is $V_2$, satisfying: $0.6V_1 \leq V_2 \leq V_1$.

In the above embodiments, $V_2$ is greater than or equal to $0.6V_1$, ensuring that the filling portion in the groove is relatively large in volume, thereby enabling the filling portion to suppress the growth of lithium dendrites to some extent. $V_2$ is less than or equal to $V_1$, thereby making the filling portion less prone to protrude beyond the groove and less prone to increase the thickness of the secondary battery, and consequently less prone to reduce the energy density of the secondary battery. When $V_2$ is equal to $V_1$, the filling portion is enabled to fill and level the groove, thereby improving the levelness of the surface of the first active material layer. In addition, the entire groove is filled with the filling portion, and the filling portion covers the entire groove wall, thereby ensuring that all parts of the groove wall are supported by the filling portion. In contrast to a groove not completely filled with the filling portion, this technical solution more effectively suppresses lithium dendrites.

In one or more of the above embodiments, $0.9V_1 \leq V_2 \leq V_1$.

In the above embodiments, $V_2$ is greater than or equal to $0.9V_1$, thereby making the filling portion larger in volume, making the filling portion cover a larger area of the groove wall, and more effectively suppressing the growth of lithium dendrites in the groove.

In one or more of the above embodiments, the filler is fully disposed inside the groove.

In the above embodiments, no filler is disposed at a position not provided with the groove on the first active material layer. Therefore, the thickness of the electrode plate is less prone to increase while the growth of lithium dendrites is suppressed, thereby being less prone to reduce the energy density of the secondary battery.

In one or more of the above embodiments, the filler further includes a coating portion. The coating portion is disposed in a region on a side of the first active material layer, where the region is not provided with the groove, and the side faces toward the separator.

In the above embodiments, the coating portion can protect the electrode plate, increase the mechanical strength of the first electrode plate, and facilitate storage of more electrolyte solution, thereby further facilitating lithium-ion transport, and suppressing the growth of lithium dendrites in a region on a side of the first active material layer to some extent, where the region is not provided with the groove, and the side faces toward the separator.

In one or more of the above embodiments, the coating portion and the filling portion are integrally formed.

In the above embodiments, the integrally formed coating portion and filling portion can reduce the probability of separation between the coating portion and the filling portion, thereby reducing lithium plating in a gap between the coating portion and the filling portion, and further enhancing the suppression of the growth of lithium dendrites.

In one or more of the above embodiments, along a thickness direction of the first electrode plate, a thickness of the coating portion is $h_1$, satisfying $0.5 \ \mu m \leq h_1 \leq 2 \ \mu m$.

In the above embodiments, when $h_1$ is greater than or equal to $0.5 \ \mu m$, the thickness can meet the requirements for increasing the mechanical strength of the first electrode plate and the capacity of the electrolyte storage in the first electrode plate, and suppressing the growth of lithium dendrites. When $h_1$ is less than or equal to $2 \ \mu m$, the energy density is less prone to be decreased by an excessive thickness of the battery cell.

In one or more of the above embodiments, along a thickness direction of the first electrode plate, a thickness of the first active material layer at a position not provided with the groove is $H_1$, and a depth of the groove is $H_2$, satisfying: $H_1/4 \leq H_2 \leq H_1/2$.

In the above embodiments, when $H_2$ is greater than or equal to $H_1/4$, the groove is relatively deep, thereby making it convenient for the electrolyte solution to infiltrate the first active material layer through the groove, and consequently providing transport power for lithium ions, making it convenient to intercalate lithium ions into the first active material layer, and reducing lithium plating. When $H_2$ is less than or equal to $H_1/2$, the first active material layer at the groove is less prone to be deficient, thereby providing sufficient space for lithium ion intercalation and reducing lithium plating.

According to a second aspect, an embodiment of this application further provides a secondary battery manufacturing method, applicable to manufacturing the secondary battery disclosed in any one of the above embodiments. The method includes the following steps:

filling: filling the groove with the filler; and
stacking: stacking the separator and the second electrode plate on the first electrode plate sequentially along a thickness direction of the first electrode plate such that the separator is located between the first active material layer and the second electrode plate.

In the above embodiment, by providing a filler in the groove of the first active material layer, this application enables the filler to block the extension and growth of lithium dendrites in the groove, thereby suppressing lithium plating in the groove, making the separator less prone to be pierced by freely growing lithium dendrites, and improving the safety performance of the electrode assembly.

In one or more of the above embodiments, the filling step includes:

coating: applying a filler slurry to one side, facing the separator, of the first active material layer; and
leveling: letting the applied filler slurry flow into the groove.

In the above embodiments, by coating first and then leveling, this application enables the filler slurry to flow into a plurality of grooves of the first active material layer simultaneously, thereby improving the efficiency of disposing fillers into the grooves.

In one or more of the above embodiments, the filling step further includes: curing: curing the filler slurry to form the filler.

According to a third aspect, an embodiment of this application further provides an electrical device. The electrical device includes the secondary battery disclosed in any one of the above embodiments.

In the above embodiments, by providing fillers on the first active material layer of the secondary battery, this application suppresses the growth of lithium dendrites, reduces the risk of the separator being pierced, and consequently increasing the lifespan of the secondary battery and the lifespan of the electrical device.

**BRIEF DESCRIPTION OF DRAWINGS**

FIG. 1 is a schematic diagram of a secondary battery according to an embodiment of this application;
FIG. 2 is a close-up view of a part II shown in FIG. 1;
FIG. 3 is a cross-sectional view of a part of a first electrode plate according to an embodiment of this application;
FIG. 4 is a schematic view of a part of a first active material layer of a first electrode plate according to an embodiment of this application;
FIG. 5 is a top view of a part of a first electrode plate according to an embodiment of this application;
FIG. 6 is a side view of a part of a first electrode plate according to another embodiment of this application;
FIG. 7 is a cross-sectional view of a part of a first active material layer and a filler according to an embodiment of this application; and
FIG. 8 is a schematic diagram of an electrical device according to an embodiment of this application.

List of reference signs:

| | |
|---|---|
| electrical device | 1000 |
| secondary battery | 100 |
| electrode assembly | 10 |
| first electrode plate | 11 |
| first current collector | 111 |
| first surface | 111a |
| second surface | 111b |
| first active material layer | 112 |
| groove | 1121 |
| groove opening | 1121a |
| groove wall | 1121b |
| filler | 113 |
| filling portion | 1131 |
| coating portion | 1132 |
| first tab | 114 |
| second electrode plate | 12 |
| second current collector | 121 |
| third surface | 121a |
| fourth surface | 121b |
| second active material layer | 122 |
| second tab | 123 |
| separator | 13 |
| first separator | 13a |
| second separator | 13b |
| housing | 20 |

(continued)

| device body | 200 |
| first direction | X |
| second direction | Y |

This application is further described below with reference to the following specific embodiments and the foregoing drawings.

## DETAILED DESCRIPTION

The following describes the technical solutions in the embodiments of this application with reference to the drawings hereto. Evidently, the described embodiments are merely a part of but not all of the embodiments of this application.

Unless otherwise defined, all technical and scientific terms used herein bear the same meanings as what is normally understood by a person skilled in the technical field of this application. The terms used in the specification of this application are merely intended to describe specific embodiments but not to limit this application.

In the description of embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

In the design of secondary batteries, an energy density may be increased by increasing the coating weight of an active material layer on an electrode plate. However, after the weight of the active material layer applied is increased, an electrolyte solution can hardly infiltrate the electrode plate, and the active material layer needs to be perforated to improve the infiltration effect of the electrolyte solution for the electrode plate.

In a groove formed by perforating the active material layer, the lithium-ion transmission path is long, and the local current density is high, thereby being prone to generate lithium dendrites. Moreover, without being hindered by the separator, the lithium dendrites in the groove grow in a free state, thereby being prone to pierce the separator and cause safety hazards.

An embodiment of this application provides a secondary battery. The secondary battery includes an electrode assembly. The electrode assembly includes a first electrode plate, a second electrode plate, and a separator. The first electrode plate includes a first current collector and a first active material layer. The first active material layer is disposed on at least one surface of the first current collector along a thickness direction of the first current collector. The second electrode plate includes a second current collector and a second active material layer. The second active material layer is disposed on at least one surface of the second current collector along a thickness direction of the second current collector. The separator is disposed between the first active material layer and the second active material layer. The first active material layer is provided with a groove. The groove includes a groove opening and a groove wall. Along a thickness direction of the first electrode plate, the groove opening faces toward the separator. Another side of the separator corresponds to the second active material layer, the other side being opposite to one side facing the groove opening. The first electrode plate further includes a filler. The filler includes a filling portion. The filling portion is located in the groove. The filling portion covers at least a part of the groove wall.

In the above embodiment, when lithium dendrites are deposited in the groove, the filler in the groove can separate the separator from the lithium dendrites deposited in the groove, and limit the growth of lithium dendrites in the groove toward the separator, thereby hindering the lithium dendrites from piercing the separator. When the lithium dendrites deposited on the first active material layer come into contact with the filler, the filler can also apply a pressure to the lithium dendrites. In this way, the lithium dendrites are less prone to generate sharp free-growth ends, thereby reducing the risk of the lithium dendrites piercing the separator, and improving the safety of the secondary battery in use.

The following further describes the embodiments of this application with reference to drawings. To the extent that no conflict occurs, the following embodiments and the features in the embodiments may be combined with each other.

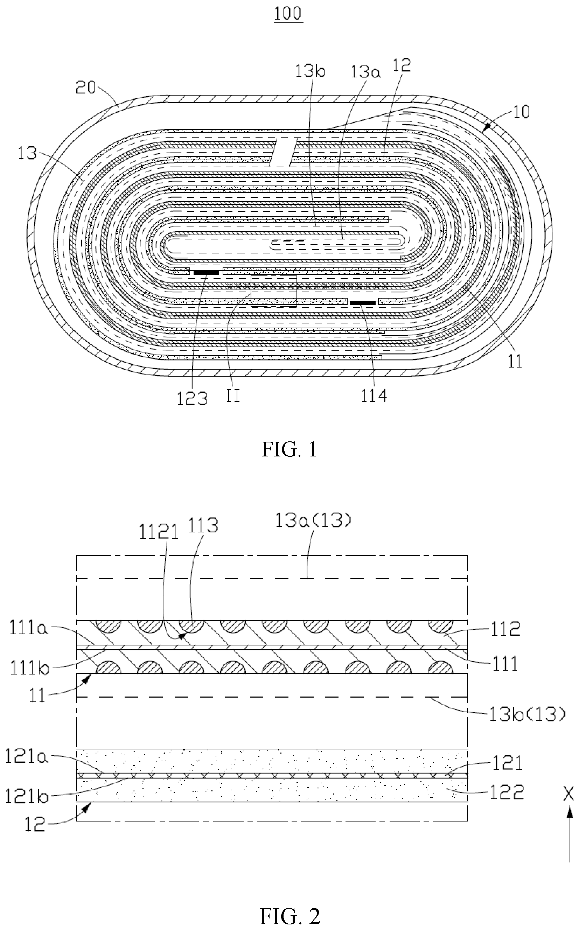

As shown in FIG. 1, a first embodiment of this application provides a secondary battery 100, including an electrode assembly 10 and a housing 20. The electrode assembly 10 is accommodated in the housing 20. The electrode assembly 10 includes a first electrode plate 11, a second electrode plate 12, and a separator 13. The separator 13 is disposed between the first electrode plate 11 and the second electrode plate 12. The separator 13 is configured to separate the first electrode plate 11 from the second electrode plate 12.

In some embodiments, the housing 20 is a flexible pouch such as an aluminum laminated film. In other embodiments, the housing 20 is a hard shell such as a plastic shell, or is a metal shell containing at least one of a steel alloy, an aluminum alloy, or a copper alloy.

In some embodiments, an electrolyte solution (not shown in the figure) is injected into the housing 20. The components of the electrolyte solution include a solvent, an electrolyte salt, and an additive.

In some embodiments, the electrolyte salt includes at least one of an organic lithium salt or an inorganic lithium salt.

In some embodiments, the electrolyte salt includes, but is not limited to, at least one of lithium hexafluorophosphate ($LiPF_6$), lithium bis(trifluoromethanesulfonyl)imide $LiN(CF_3SO_2)_2$ (LiTFSI), lithium bis(fluorosulfonyl)imide $Li(N(SO_2F)_2)$ (LiFSI), lithium hexafluorocesium oxide ($LiCsF_6$), lithium perchlorate $LiClO_4$, or lithium trifluoromethanesulfonate ($LiCF_3SO_3$).

In some embodiments, the polarity of the first electrode plate 11 is different from the polarity of the second electrode plate 12. For example, the first electrode plate 11 is a negative electrode plate, and the second electrode plate 12 is a positive electrode plate.

Referring to FIG. 1, in some embodiments, the first electrode plate 11, the separator 13, and the second electrode plate 12 are stacked and then wound to form a wound structure.

In some embodiments, the secondary battery 100 includes a plurality of first electrode plates 11, a plurality of separators 13, and a plurality of second electrode plates 12. Any first electrode plate 11 is separated from any second electrode plate 12 by a separator 13, where the two electrode plates are adjacent to each other.

Referring to FIG. 1 and FIG. 2, in some embodiments, the first electrode plate 11 includes a first current collector 111 and a first active material layer 112. The first active material layer 112 is disposed on at least one surface of the first current collector 111 along a thickness direction of the first current collector 111. The second electrode plate 12 includes a second current collector 121 and a second active material layer 122. The second active material layer 122 is disposed on at least one surface of the second current collector 121 along a thickness direction of the second current collector 121. The separator 13 is disposed between the first active material layer 112 and the second active material layer 122. The thickness direction of the first current collector 111 and the thickness direction of the second current collector 121 are a first direction X.

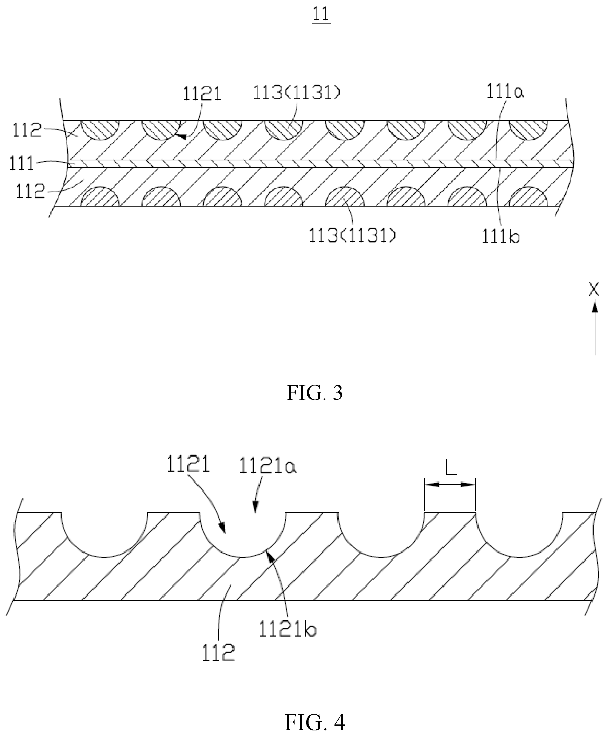

Referring to FIG. 2 and 3, in some embodiments, along the thickness direction of the first electrode plate 11, the first current collector 111 includes a first surface 111a and a second surface 111b disposed opposite to each other. The thickness direction of the first electrode plate 11 is consistent with the thickness direction of the first current collector 111, and the thickness direction of the first electrode plate 11 is the first direction X. At least one of the first surface 111a or the second surface 111b is coated with a first active material layer 112. For example, both the first surface 111a and the second surface 111b are coated with the first active material layer 112.

Referring to FIG. 2, in some embodiments, along the thickness direction of the second electrode plate 12, the second current collector 121 includes a third surface 121a and a fourth surface 121b disposed opposite to each other. The thickness direction of the second electrode plate 12 is consistent with the thickness direction of the second current collector 121. At least one of the third surface 121a or the fourth surface 121b is coated with a second active material layer 122. For example, both the third surface 121a and the fourth surface 121b are coated with the second active material layer 122.

Referring to FIG. 1, in some embodiments, for a wound electrode assembly 10, the first electrode plate 11 further includes a first tab 114. The first tab 114 is welded to the first current collector 111. The second electrode plate 12 further includes a second tab 123. The second tab 123 is welded to the second current collector 121.

In some embodiments, for a stacked electrode assembly 10, the first electrode plate 11 further includes a first tab 114. The first tab 114 and the first current collector 111 are integrally formed. The second electrode plate 12 further includes a second tab 123. The second tab 123 and the second current collector 121 are integrally formed.

In some embodiments, the first tab 114 and the second tab 123 are located on the same side or different sides of the electrode assembly 10.

Using an example in which the first electrode plate 11 is a negative electrode plate and the second electrode plate 12 is a positive electrode plate, the first current collector 111 and the second current collector 121 may be metal layers. The first current collector 111 may be a metal layer containing at least one of copper, nickel, tantalum, titanium, or the like, such as copper foil. The second current collector 121 may be a metal layer containing at least one of aluminum, nickel, tantalum, titanium, or the like, such as aluminum foil.

Using an example in which the first electrode plate 11 is a negative electrode plate and the second electrode plate 12 is a positive electrode plate, the first active material layer 112 is of a negative polarity. The first active material layer 112 includes a negative active material. The negative active material may include at least one of graphite, hard carbon, soft carbon, silicon, a silicon-oxygen material, a silicon-carbon material, or the like. The second active material layer 122 is of a positive polarity. The second active material layer 122 includes a positive active material. The positive active material may include at least one of lithium cobalt oxide, lithium nickel cobalt manganese oxide, lithium nickel cobalt aluminum oxide, lithium iron phosphate, lithium manganese iron phosphate, lithium manganese oxide, or the like.

Referring to FIG. 2 to FIG. 4, in some embodiments, the first active material layer 112 is provided with a groove 1121. The groove 1121 includes a groove opening 1121a and a groove wall 1121b. Along a thickness direction of the first electrode plate 11, the groove opening 1121a faces toward the separator 13. Another side of the separator 13 corresponds to the second active material layer 122, the other side being opposite to one side facing the groove opening 1121a. The first electrode plate 11 further includes a filler 113. The filler 113 includes a filling portion 1131. The filling portion 1131 is located in the groove 1121. The filling portion 1131 covers at least a part of the groove wall 1121b. Understandably, the groove wall 1121b is a wall surface that defines an internal space of the groove 1121. The groove wall 1121b includes a sidewall and a groove bottom. The filling portion 1131 covers at least a part of the sidewall and the groove bottom.

In the related design of secondary batteries, an energy density may be increased by increasing the coating weight of an active material layer on an electrode plate. However, after the weight of the active material layer applied is increased, the thickness of the active material layer increases accordingly, thereby leading to a decline in the overall kinetic performance of the electrode assembly 10, and making it difficult for the electrolyte solution to infiltrate the electrode plate. Therefore, it is necessary to create a groove 1121 on the active material layer using a laser drilling technique, so as to improve the electrolyte infiltration effect for the electrode plate in the thickness direction of the electrode plate. After the groove 1121 is created on the active material layer, the coating weight on the electrode plate can be increased, thereby increasing the energy density in contrast to the original coating weight. However, after the groove 1121 is created, the coating weight of the active material may be insufficient at the position provided with the groove 1121 on the electrode plate, thereby leading to a long lithium-ion transport path in the groove 1121 and a high current density in a local region, facilitating deposition of lithium dendrites, making lithium dendrites grow in a free state, and being more prone to pierce the separator 13.

The pores of the filler 113 allow the electrolyte solution to pass through, so as to enable the electrolyte solution to infiltrate the first active material layer 112 in the groove 1121. When lithium dendrites are deposited in the groove 1121, the filler 113 in the groove 1121 can separate the separator 13 from the lithium dendrites deposited in the groove 1121, and limit the growth of lithium dendrites in the groove 1121 toward the separator 13, thereby hindering the lithium dendrites from piercing the separator 13.

When the lithium dendrites deposited on the first active material layer 112 come into contact with the filler 113, the filler 113 can also apply a pressure to the lithium dendrites. In this way, the lithium dendrites are less prone to generate free-growth ends, thereby reducing the risk of the lithium dendrites piercing the separator 13, and improving the safety of the secondary battery 100 in use.

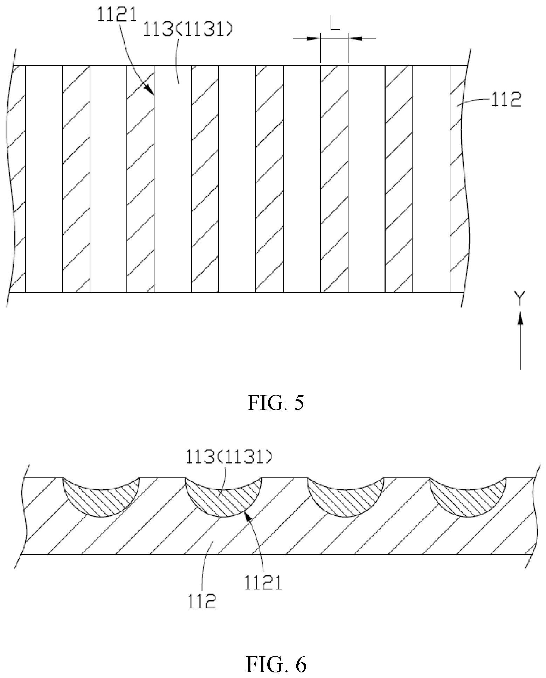

Referring to FIG. 3 and FIG. 5, in some embodiments, a plurality of grooves 1121 are provided on the first active material layer 112. The plurality of grooves 1121 are distributed in an array. For example, the plurality of grooves 1121 are distributed in a rectangular array.

Referring to FIG. 3 and FIG. 5, in some embodiments, the groove 1121 extends along the width direction of the first electrode plate 11. The width direction of the first electrode plate 11 is the second direction Y shown in the figures. Viewed from the side view of the first active material layer 112, the groove 1121 assumes a roughly semi-circular outline. Viewed from the top view of the first active material layer 112, the groove 1121 assumes a rectangular outline, and the plurality of grooves 1121 are arranged sequentially along the length direction of the first active material layer 112.

Along the thickness direction of the first electrode plate 11, a thickness of the first active material layer 112 at a position not provided with the groove 1121 is $H_1$, and a depth of the groove 1121 is $H_2$, satisfying: $H_1/4 \leq H_2 \leq H_1/2$.

When $H_2$ is greater than or equal to $H_1/4$, the groove 1121 is relatively deep, thereby making it convenient for the electrolyte solution to infiltrate the first active material layer 112 through the groove 1121, and consequently providing transport power for lithium ions, making it convenient to intercalate lithium ions into the first active material layer 112, and reducing lithium plating. When $H_2$ is less than or equal to $H_1/2$, the first active material layer 112 at the groove 1121 is less prone to be deficient, thereby providing sufficient space for lithium ion intercalation and reducing lithium plating.

Referring to FIG. 5, in some embodiments, a distance between adjacent grooves 1121 is L, satisfying $0.8 \, mm \leq L \leq 2.0 \, mm$. As an example, L may be, but is not limited to, 0.8 mm, 0.9 mm, 1.0 mm, 1.1 mm, 1.2 mm, 1.3 mm, 1.4 mm, 1.5 mm, 1.6 mm, 1.7 mm, 1.8 mm, 1.9 mm, 2.0 mm, or any other value falling within a range formed by any two thereof.

Referring to FIG. 3, FIG. 4, and FIG. 6, in some embodiments, the internal space volume of the groove 1121 is $V_1$, and the volume of the filling portion 1131 is $V_2$, satisfying: $0.6V_1 \leq V_2 \leq V_1$. As an example, $V_2$ may be, but is not limited to, $0.6V_1$, $0.65V_1$, $0.7V_1$, $0.75V_1$, $0.8V_1$, $0.85V_1$, $0.9V_1$, $0.95V_1$, or $V_1$, or any other value falling within a range formed by any two of the values of $V_2$.

$V_2$ is greater than or equal to $0.6V_1$, ensuring that the filling portion 1131 in the groove 1121 is relatively large in volume, thereby enabling the filling portion 1131 to suppress the growth of lithium dendrites to some extent. $V_2$ is less than or equal to $V_1$, thereby making the filling portion 1131 less prone to protrude beyond the groove 1121 and less prone to increase the thickness of the secondary battery 100, and consequently less prone to reduce the energy density of the secondary battery 100.

In some embodiments, $0.9V_1 \leq V_2 \leq V_1$. $V_2$ is greater than or equal to $0.9V_1$, thereby making the filling portion 1131 larger in volume, making the filling portion 1131 cover a larger area of the groove wall 1121b, and enabling the filling portion 1131 to more effectively suppress the growth of lithium dendrites.

Referring to FIG. 3, in some embodiments, $V_2$ is equal to $V_1$, and the filling portion 1131 covers the entire groove wall 1121b. This allows the filling portion 1131 at the groove 1121 to fill and level the groove 1121, thereby improving the levelness of the surface of the first active material layer 112. The entire groove 1121 is filled with the filler 113, and the filling portion 1131 covers the entire groove wall 1121b, thereby ensuring that all parts of the groove 1121b wall are supported by the filling portion 1131. In contrast to a groove 1121 not completely filled with the filling portion 1131, this technical solution more effectively suppresses lithium dendrites.

It is noted that during manufacturing, when the filler 113 is applied into the groove 1121 in the form of a filler slurry, the groove 1121 is gradually filled by virtue of the fluidity of the slurry. For a single groove 1121, when the volume of the applied slurry is less than the volume of the groove 1121, the slurry first flows gradually along the sidewall of the groove 1121, and when the slurry flows to the bottom of the groove 1121, the slurry gradually fills the entire groove 1121. As shown in FIG. 3, the filling portion 1131 fills the entire groove 1121. As shown in FIG. 6, the filling portion 1131 does not fill the entire groove 1121. Understandably, in contrast to the state where the filling portion 1131 does not fill the entire groove 1121, when the filling portion 1131 fills the entire groove 1121, the probability of forming a gap between the filling portion 1131 and the groove wall 1121b of the groove 1121 is lower, resulting in improved suppression of lithium plating.

Referring to FIG. 3, in some embodiments, the filler 113 is fully disposed in the groove 1121. No filler 113 is disposed at a position not provided with the groove 1121 on the first active material layer 112. Therefore, the thickness of the first electrode plate 11 is less prone to increase while the growth of lithium dendrites is suppressed, thereby being less prone to reduce the energy density of the secondary battery 100.

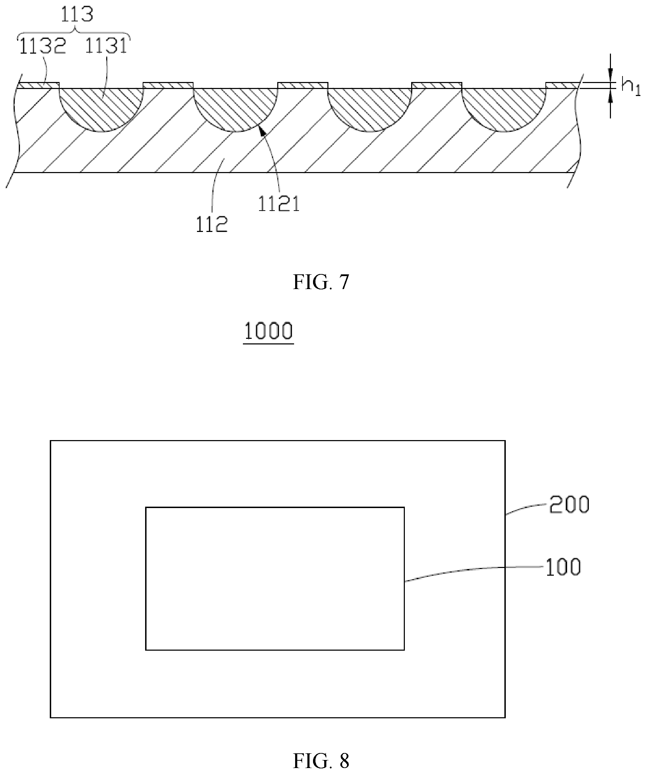

Referring to FIG. 7, in some embodiments, the filler 113 further includes a coating portion 1132. The coating portion 1132 is disposed in a region on a side of the first active material layer 112, where the region is not provided with the groove 1121, and the side faces toward the separator 13.

The coating portion 1132 can protect the first electrode plate 11, increase the mechanical strength of the first electrode plate 11, and facilitate storage of more electrolyte solution, thereby further facilitating lithium-ion transport, and suppressing the growth of lithium dendrites in a region on a side of the first active material layer 112 to some extent, where the region is not provided with the groove 1121, and the side faces toward the separator 13.

In some embodiments, the coating portion 1132 and the filling portion 1131 are integrally formed. The integrally formed coating portion 1132 and filling portion 1131 can reduce the probability of separation between the coating portion 1132 and the filling portion 1131, thereby reducing lithium plating in a gap between the coating portion 1132 and the filling portion 1131, and further enhancing the suppression of the growth of lithium dendrites.

Referring to FIG. 7, in some embodiments, along the thickness direction of the first electrode plate 11, the thickness of the coating portion 1132 is $h_1$, satisfying $0.5 \, \mu m \leq h_1 \leq 2 \, \mu m$. When $h_1$ is greater than or equal to $0.5 \, \mu m$, the thickness can meet the requirements for increasing the mechanical strength of the first electrode plate 11 and the capacity of the electrolyte storage in the first electrode plate 11, and suppressing the growth of lithium dendrites. When $h_1$ is less than or equal to $2 \, \mu m$, the energy density is less prone to be decreased by an excessive thickness of the battery cell.

As an example, $h_1$ may be, but is not limited to, $0.5 \, \mu m$, $0.6 \, \mu m$, $0.7 \, \mu m$, $0.8 \, \mu m$, $0.9 \, \mu m$, $1.0 \, \mu m$, $1.1 \, \mu m$, $1.2 \, \mu m$, $1.3 \, \mu m$, $1.4 \, \mu m$, $1.5 \, \mu m$, $1.6 \, \mu m$, $1.7 \, \mu m$, $1.8 \, \mu m$, $1.9 \, \mu m$, $2.0 \, \mu m$, or any other value falling within the specified range of $h_1$.

In some embodiments, the filler 113 is made of a material including at least one of a ceramic material or a resin material.

On the one hand, the ceramic material and the resin material provide rigid support. When lithium dendrites grow and extend until contact with the ceramic material or resin material, the ceramic material or resin material blocks the growth of lithium dendrites, thereby suppressing further growth of the lithium dendrites. On the other hand, the ceramic material and the resin material are of high porosity, and lithium ions can pass through the pores, thereby reducing the impact on lithium-ion transport. In addition, the ceramic material and the resin material are insulative, and can achieve a trade-off between the electrolyte infiltration effect and the safety performance of the secondary battery.

In some embodiments, the ceramic material is at least one selected from aluminum oxide, boehmite, titanium oxide, magnesium oxide, calcium oxide, or zirconium oxide.

In some embodiments, the resin material is at least one selected from polyimide (PI), polytetrafluoroethylene (PTFE), or polyvinyl butyral (PVB).

In some embodiments, the filler 113 is made of a material including a ceramic material, a binder, a solvent, and an additive. The ceramic material includes ceramic particles. The ceramic particles provide rigid support, and exhibit excellent thermal stability and dimensional integrity, thereby maintaining support in a high-temperature environment while ensuring lithium-ion transport in the electrolyte solution. The binder can improve the adhesion between the filler 113 and the first active material layer 112, thereby making it convenient to cure the filling portion 1131 in the groove 1121, making the filling portion 1131 less prone to detach from the groove 1121, and more effectively suppressing the growth of lithium dendrites in the groove 1121.

As an example, the binder is at least one selected from polyvinyl alcohol (PVA), carboxymethyl cellulose (CMC) (aqueous), or polyvinylidene fluoride (PVDF). The polyvinylidene fluoride can increase the adhesion between the coating portion 1132 on the surface of the first electrode plate 11 and the separator 13 and improve conductivity. The solvent may be an aqueous solvent or an oil-based solvent. The aqueous solvent includes water, ethanol, glycerol, and other polar organic solvents. The oil-based solvent includes acetone, N-methylpyrrolidone (NMP), and other non-polar solvents.

Referring to FIG. 1 to FIG. 2, in some embodiments, two separators 13 are provided. The two separators 13 are a first separator 13a and a second separator 13b. The first separator 13a, the first electrode plate 11, the second separator 13b, and the second electrode plate 12 are stacked sequentially and then form a wound structure.

In some embodiments, the separator 13 includes a base film. The base film is an insulating film such as a polyethylene film, a polypropylene film, a polyester film, or a polyimide film.

An embodiment of this application further provides a method for manufacturing a secondary battery 100. The method includes the following steps:

filling: filling the groove 1121 with the filler 113; and
stacking: stacking the separator 13 and the second electrode plate 12 on the first electrode plate 11 sequentially along a thickness direction of the first electrode plate 11 such that the separator 13 is located between the first active material layer 112 and the second electrode plate 12.

By providing a filler 113 in the groove 1121 of the first active material layer 112, this application enables the filler 113 to block the extension and growth of lithium dendrites in the groove 1121, thereby suppressing lithium plating in the groove 1121, making the separator 13 less prone to be pierced by freely growing lithium dendrites, and improving the safety performance of the electrode assembly 10.

In some embodiments, the filling step includes:

coating: applying a filler slurry to one side, facing the separator 13, of the first active material layer 112; and
leveling: letting the applied filler slurry flow into the groove 1121.

By coating first and then leveling, this application enables the filler slurry to flow into a plurality of grooves 1121 of the first active material layer 112 simultaneously, thereby improving the efficiency of disposing fillers 113 into the grooves 1121.

In some embodiments, the filler slurry may be applied using a narrow-slot extrusion coating method, a spray coating method, or a gravure coating method. The narrow-slot extrusion coating method is a process by which the filler slurry is extruded from a nozzle under pressure and applied onto the first active material layer 112. The coating thickness is controlled by the nozzle slit width and a metering pump. In contrast to the spray coating method and the gravure coating method, the narrow-slot extrusion coating method provides more uniform coating and easier control of the coating amount, and is less prone to an excessive coating thickness, and is performed at a higher coating speed.

In some embodiments, the filler slurry is made to flow into the groove 1121 by vibrating the first electrode plate 11, so as to accelerate the flow speed of the filler slurry, improve the molding efficiency of the filler 113, and improve the levelness of the filler slurry in the groove 1121.

In some embodiments, all the applied filler slurry flows into the groove 1121 to form a filling portion 1131.

In other embodiments, a part of the applied filler slurry flows into the groove 1121 to form a filling portion 1131 while another part is located in a region of the first active material layer 112 to form a coating portion 1132, the region being not provided with the groove 1121. The thickness of the coating portion 1132 is adjusted by setting the weight of the filler slurry applied per unit area.

In some embodiments, the filler slurry is a ceramic material slurry or a resin material slurry.

In some embodiments, the filling step further includes: curing: curing the filler slurry to form the filler 113.

As an example, the curing method may be heat-curing. For example, the first electrode plate 11 filled with the filler slurry is dried in a vacuum oven to improve the curing efficiency of the filler 113.

In some embodiments, the stacking step includes: stacking a plurality of second electrode plates 12, a plurality of separators 13, and a plurality of first electrode plates 11 along the thickness direction of the first electrode plate 11, where one separator 13 is disposed between each first electrode plate 11 and each second electrode plate 12.

Referring to FIG. 8, an embodiment of this application further provides an electrical device 1000. The electrical device 1000 includes the secondary battery 100 disclosed in any one of the above embodiments.

By providing fillers 113 on the first active material layer 112 of the secondary battery 100, this application suppresses the growth of lithium dendrites, thereby increasing the lifespan of the secondary battery 100 and the lifespan of the electrical device 1000.

In some embodiments, the electrical device 1000 may be a mobile phone, a laptop computer, a tablet computer, an unmanned aerial vehicle, an electrical tool, an electrical toy, a game console, a video recorder, a portable recorder, a radio, a smart watch, or the like, which are not enumerated here exhaustively.

Referring to FIG. 8, in some embodiments, the electrical device 1000 further includes a device body 200. The secondary battery 100 is mounted in the device body 200. The electrical device 1000 employs the technical solutions of the secondary battery 100 disclosed in any one of the above embodiments, and therefore, achieves at least the beneficial effects brought by the technical solutions of the secondary battery 100 disclosed in any one of the above embodiments, the details of which are omitted here.

To verify the effect of the filler 113 on the performance of the secondary battery 100, the applicant hereof has performed the following experiment:

The experiment includes one comparative embodiment and 16 embodiments. The negative electrode plate of the secondary battery 100 used in the comparative embodiment is not provided with a filling portion 1131. The negative electrode plate of the secondary battery 100 used in the embodiments is provided with a filling portion 1131. The configuration of the coating portion 1132 in each embodiment is shown in Table 1 below. The secondary batteries 100 in different embodiments differ only in the parameters listed in Table 1 below, and are the same in all other aspects.

The following describes the specific implementations of the secondary batteries 100 in each embodiment and each comparative embodiment.

The secondary battery 100 in the comparative embodiment is assembled in the following process:

1. Preparation of a positive electrode plate

Mixing lithium cobalt oxide as a positive active material, acetylene black as a positive conductive agent, and polyvinylidene fluoride (PVDF, with a weight-average molecular weight of $5\times10^5$) as a positive electrode binder at a mass ratio of 94:3:3, and then adding N-methylpyrrolidone (NMP) as a solvent, and stirring the mixture with a vacuum mixer until the system is homogeneous, so as to obtain a positive electrode slurry in which the solid content is 75 wt%. Using 8 $\mu$m-thick aluminum foil as a positive current collector, and affixing a foam adhesive to a preset position on one surface of the positive current collector aluminum foil along the thickness direction of the foil. Applying the positive electrode slurry evenly to one surface of the positive current collector aluminum foil along the thickness direction of the foil, and drying the foil at 110 °C to obtain a positive electrode plate coated with an 80 $\mu$m-thick positive active material layer on a single side. Subsequently, repeating the above steps on the other surface of the aluminum foil along the thickness direction to obtain a positive electrode plate coated with the positive active material layer on both sides. Next, the previously affixed foam adhesive is removed, creating a blank foil region for welding a positive tab.

2. Preparation of a negative electrode plate

Mixing graphite powder and silicon powder as a negative active material, conductive carbon black (Super P) as a conductive agent, and styrene-butadiene rubber (SBR) as a binder at a mass ratio of 67.5:30:1:1.5, and then adding deionized water as a solvent to formulate a negative electrode slurry in which the solid content is 50 wt%, and stirring well. Using 5 $\mu$m-thick copper foil as a negative current collector. Applying the negative electrode slurry evenly to one surface of the negative current collector copper foil along the thickness direction of the foil, and drying the foil at 90 °C to obtain a single-side-coated negative electrode plate. The coating on a single side of the negative electrode plate is completed upon completion of the above steps. Subsequently, repeating the above steps on the other surface of the negative electrode plate along the thickness direction to obtain a negative electrode plate coated with the negative active material layer on both sides. Next, grooves 1121 that are 85 $\mu$m wide and 10 $\mu$m deep each are laser-etched in the double-side-coated negative active material layer. A distance L between adjacent grooves 1121 is 1.3 mm. Afterward, a blank copper foil region for welding a negative tab is laser-etched at a preset position on the negative electrode plate.

3. Preparation of a separator 13

Using an 8 $\mu$m-thick polyethylene (PE) film as a separator 13.

4. Preparation of an electrolyte solution

Mixing ethylene carbonate, ethyl methyl carbonate, and diethyl carbonate at a mass ratio of 30:50:20 in an dry argon atmosphere to obtain an organic solution, and then adding lithium hexafluorophosphate as a lithium salt into the organic solvent to dissolve, and stirring well to obtain an electrolyte solution in which the lithium salt concentration is 1.15 mol/L.

5. Preparation of a secondary battery 100

Ultrasonically welding an aluminum tab onto a blank aluminum foil region that is pre-designed for welding a positive tab, so as to obtain a positive electrode plate on which a positive tab is welded. Ultrasonically welding a nickel tab onto a blank copper foil region that is pre-designed for welding a negative tab, so as to obtain a negative electrode plate on which a negative tab is welded. Stacking the prepared separator 13, the positive electrode plate with a welded positive tab, the separator 13, and the negative electrode plate with a welded negative tab in sequence, and then winding the stacked structure to obtain an electrode assembly 10. Placing the electrode assembly 10 into an aluminum laminated film pouch, and letting both the positive tab and the negative tab extend out from a top seal edge of the pouch. Dehydrating the electrode assembly at 80 °C, and then injecting an electrolyte solution, and sealing the pouch.

The secondary batteries 100 used in Comparative Embodiment 1 and Embodiments 1 to 16 are 78.35 mm long, 68.62 mm wide, and 5.15 mm thick. The width of the negative electrode plate is 73.95 mm. The length direction of the secondary batteries 100 is consistent with the width direction of the negative electrode plate and the positive electrode plate. The grooves 1121 etched on the negative electrode plate is 73.95 mm long. The length direction of the grooves 1121 is consistent with the width direction of the negative electrode plate. The pouch takes up a dimension of 4.4 mm in the length direction of the secondary battery 100.

The negative plates used in Embodiments 1 to 16 involve, in addition to the steps described above, the filling step in the manufacturing method of the secondary battery 100 described above, in which the filler slurry is an aluminum oxide material. In Embodiments 1 to 3 and Embodiments 12 to 16, only the filling portion 1131 is formed through the filling step. In Embodiments 4 to 11, the filling portion 1131 and the coating portion 1132 are formed through the filling step, the details of which are omitted here and reference may be made to the preceding text.

After the secondary batteries 100 in Comparative Embodiment 1 and Embodiments 1 to 16 are prepared, the secondary batteries 100 in each embodiment or comparative embodiment are subjected to the following tests.

The test methods are as follows:

(1) Performing a cycle test on a secondary battery 100 according to the following procedure: charging the secondary battery 100 at a maximum constant current (CC) of 2.8C until the voltage reaches a cutoff voltage of 4.26 V, and then charging the secondary battery 100 at a maximum constant current (CC) of 2.5C until the voltage reaches a cutoff voltage of 4.3 V, and then charging the secondary battery 100 at a maximum constant current (CC) of 2.0C until the voltage reaches a cutoff voltage of 4.45 V. Subsequently, charging the battery at a constant voltage (CV) of 4.45 V until the current drops to 1.2C, and then charging the secondary battery 100 at a maximum constant current (CC) of 1.2C until the voltage reaches a cutoff voltage of 4.5 V, and then charging the battery at a constant voltage (CV) of 4.5 V until the current drops to 1.0C, and then charging the secondary battery 100 at a maximum constant current (CC) of 1.0C until the voltage reaches a cutoff voltage of 4.515 V, and then charging the battery at a constant voltage (CV) of 4.515 V until the current drops to 0.025C.

Charging the secondary battery 100 stepwise, leaving the battery to stand for 5 minutes, and then discharging the battery at 0.7C until the voltage drops to 3.0 V, and then leaving the battery to stand for 5 minutes, thereby completing one cycle. Charging and discharging the secondary battery at 25 °C for 700 cycles, and then discharging the secondary battery 100 at 0.7C until the voltage drops to 3.0V, and then disassembling the secondary battery 100. Using a rectangular negative electrode plate with laser-etched grooves 1121 as a test specimen 1, where each groove is 85 $\mu$m wide and 1 cm long. Detecting a signal peak of metallic lithium on the test specimen 1 of the fully discharged negative electrode plate using differential scanning calorimetry (DSC), so as to measure the DSC peak intensity in the grooves. Calculating the amount of lithium plating based on the signal peak intensity. Under fully-discharged conditions, the metallic lithium in the negative electrode plate is irreversible lithium.

(2) Method for testing the lithium plating area in the coating portion: Discharging a secondary battery 100 at 0.2C until the voltage drops to 3 V, and then disassembling the secondary battery 100. Taking a rectangular electrode plate at the same lithium plating site as a test specimen 2, where the specimen is 1.3 mm wide and 1 cm long. Detecting a signal peak of metallic lithium on the test specimen 2 of a fully discharged negative electrode plate using differential scanning calorimetry (DSC), so as to measure the DSC peak intensity in the coating portion. Calculating the amount of lithium plating based on the signal peak intensity. Under fully-discharged conditions, the metallic lithium in the negative electrode plate is irreversible lithium.

(3) Method for testing a volumetric energy density: Placing a secondary battery 100 into a 25 °C thermostat, and leaving the battery to stand for 30 minutes so that the temperature of the secondary battery 100 is constant. Charging the constant-temperature secondary battery 100 at a constant current of 0.2C until a full-charge voltage, and then charging the battery at a constant voltage of the full-charge voltage until the current drops to 0.025C. Subsequently, discharging the battery at a current of 0.2C until the voltage drops to 3.0 V, and recording the discharge energy.

Volumetric energy density = discharge capacity × voltage plateau/(length of secondary battery 100 × width of secondary battery 100 × thickness of secondary battery 100).

In the formula, the capacity is 6500 mAh, and the voltage plateau is 3.82 V.

The test specimens for Comparative Embodiment 1 and Embodiments 1 to 16 are taken from the same position in different secondary batteries 100.

(4) Method for measuring a volume $V_1$ of a single groove 1121: Measuring the volume of a test specimen 1 using an optical profilometer.

Readiness of a specimen: First, ensuring that the specimen surface is clean and free of impurities such as dust and grease.

Instrument calibration: Before measurement, calibrating the optical profilometer to ensure the accuracy and repeatability of the measurement. The calibration typically includes zero-point calibration, system calibration, and standard specimen calibration.

Parameter setting: Setting measurement parameters.

Specimen positioning: Placing the specimen on a measurement stage of the instrument, and positioning the specimen using a microscope or camera to ensure accuracy of the measurement region.

Data acquisition: Starting a measurement program so that the instrument automatically scans the specimen surface to acquire surface morphology data. In white-light interferometry, the instrument records interference fringes generated by light of different wavelengths reflected from the specimen surface. In confocal microscopy, the instrument obtains depth information of the specimen surface by scanning point by point based on the confocal principle.

Data processing: After measurement, processing the acquired data using accompanying software, so as to generate a three-dimensional image or two-dimensional contour map of the specimen surface. Calculating the volume $V_1$ of groove 1121 by multiplying an integral of the depth in the width direction by the length of groove 1121 by means of software analysis.

(5) Sampling method for test specimens

Readiness of a specimen: First, fixing a specimen onto a microscope slide. Fixing the specimen with liquid nitrogen to maintain the structural stability of the specimen.

Positioning: Placing a slide under a microscope of a laser microdissection system, and observing the specimen at a high magnification of the microscope to determine the region to be cut. The system is equipped with a high-resolution camera for precise positioning.

Parameter setting: Setting parameters such as laser power, frequency, and scanning speed based on the specimen cutting requirements. The parameters need to be adjusted based on the thickness, hardness, and required cutting precision of the specimen.

Cutting: Activating the laser microdissection system so that the laser beam precisely cuts the specimen along a preset path. Laser cutting can achieve micrometer-level precision.

Specimen collecting: After cutting, specimen fragments fall into a collection container pre-positioned below the cutting region. The collection container is typically a microplate or a specially designed collection membrane to ensure that the cut specimens are not lost.

The sampling method for the test specimens is applicable to: the test specimen 1 in step (1), the test specimen 2 in step (2), and the measurement of the volume $V_1$ of a single groove 1121 in step (4).

After the experiment, the experimental data is compiled as shown in Table 1 below:

**Table 1**

| Embodiment/Comparative Embodiment | Is a filling portion provided in the groove? | Volume of a single groove $V_1$ ($\mu m^3$) | Volume of filling portion $V_2$ ($\mu m^3$) | Relationship between $V_1$ and V2 | Thickness of coating portion $h_1$ ($\mu m$) | DSC peak intensity in groove (mW/mg) | DSC peak intensity of coating portion (mW/mg) | Volumetric energy density (Wh/L) |
|---|---|---|---|---|---|---|---|---|
| Comparative Embodiment 1 | No | 7000000 | 0 | $V_2 = 0$ | 0 | 0.12 | / | 730.0798 |
| Embodiment 1 | Yes | 7000000 | 3500000 | $V_2 = 0.5V_1$ | 0 | 0.068 | / | 730.0798 |
| Embodiment 2 | Yes | 7000000 | 4200000 | $V_2 = 0.6V_1$ | 0 | 0.049 | / | 730.0798 |
| Embodiment 3 | Yes | 7000000 | 5600000 | $V_2 = 0.8V_1$ | 0 | 0.041 | 0.04 | 730.0798 |
| Embodiment 4 | Yes | 7000000 | 5600000 | $V_2 = 0.8V_1$ | 0.4 | 0.041 | 0.038 | 729.5312 |
| Embodiment 5 | Yes | 7000000 | 5600000 | $V_2 = 0.8V_1$ | 0.5 | 0.041 | 0.036 | 729.3717 |
| Embodiment 6 | Yes | 7000000 | 5600000 | $V_2 = 0.8V_1$ | 0.8 | 0.041 | 0.032 | 728.9475 |
| Embodiment 7 | Yes | 7000000 | 5600000 | $V_2 = 0.8V_1$ | 1.0 | 0.041 | 0.028 | 728.665 |
| Embodiment 8 | Yes | 7000000 | 5600000 | $V_2 = 0.8V_1$ | 1.5 | 0.041 | 0.016 | 727.9596 |

(continued)

| Embodiment/Comparative Embodiment | Is a filling portion provided in the groove? | Volume of a single groove $V_1$ ($\mu m^3$) | Volume of filling portion $V_2$ ($\mu m^3$) | Relationship between $V_1$ and V2 | Thickness of coating portion $h_1$ ($\mu m$) | DSC peak intensity in groove (mW/mg) | DSC peak intensity of coating portion (mW/mg) | Volumetric energy density (Wh/L) |
|---|---|---|---|---|---|---|---|---|
| Embodiment 9 | Yes | 7000000 | 5600000 | $V_2 = 0.8V_1$ | 1.8 | 0.041 | 0.011 | 727.537 |
| Embodiment 10 | Yes | 7000000 | 5600000 | $V_2 = 0.8V_1$ | 2 | 0.041 | 0.007 | 727.2555 |
| Embodiment 11 | Yes | 7000000 | 5600000 | $V_2 = 0.8V_1$ | 2.1 | 0.036 | 0.004 | 727.1149 |
| Embodiment 12 | Yes | 7000000 | 5950000 | $V_2 = 0.85V_1$ | 0 | 0.034 | / | 730.0798 |
| Embodiment 13 | Yes | 7000000 | 6300000 | $V_2 = 0.9V_1$ | 0 | 0.026 | / | 730.0798 |
| Embodiment 14 | Yes | 7000000 | 6650000 | $V_2 = 0.95V_1$ | 0 | 0.024 | / | 730.0798 |
| Embodiment 15 | Yes | 7000000 | 7000000 | $V_2 = V_1$ | 0 | 0.02 | / | 730.0798 |
| Embodiment 16 | Yes | 7000000 | 7700000 | $V_2 = 1.1V_1$ | 0 | 0.02 | / | 728.665 |
| Note: "/" represents absence of the experimental data. | | | | | | | | |

The method for measuring the volume of a single groove in Table 1 is described in step (4) above. The relationship between the volume of a single groove and the groove volume of the test specimen 1 is: volume of a single groove $V_1$ = groove volume of the test specimen 1 $\times$ length of a single groove/1 cm.

In Embodiments 4 to 11, the "volumetric energy density" is a volumetric energy density calculated with 10 coating portions 1132 added in contrast to Embodiment 3. Each turn of the wound negative electrode plate includes two plies. Each of the coating portions 1132 means a coating portion 1132 on one negative active material layer on one ply of the negative electrode plate.

As can be seen from the comparative embodiment versus any one of Embodiments 1 to 16, the lithium plating degree in the groove 1121 not provided with the filling portion 1131 is higher than the lithium plating degree in the groove 1121 provided with the filling portion 1131.

In Embodiments 2 to 15, $V_2$ satisfies: $0.6V_1 \leq V_2 \leq V_1$. As can be seen from Embodiments 2 to 15, under these conditions, as $V_2$ increases, that is, as the volume of the filling portion 1131 in the groove 1121 increases, the DSC peak intensity in the groove gradually decreases, and the lithium plating is gradually alleviated. As can be seen from comparison with Embodiment 1, when $V_2$ is excessively small, the suppression of lithium plating is poor and insufficient to meet the required lithium plating effect. As can be seen from comparison with Embodiment 16, when $V_2 > V_1$, that is, when the filling portion 1131 protrudes from the groove 1121, although the lithium plating degree can be alleviated, the thickness of the battery cell is increased, thereby reducing the energy density of the secondary battery 100.

In Embodiments 5 to 10, $h_1$ satisfies $0.5\ \mu m \leq h_1 \leq 2\ \mu m$. As can be seen from Embodiments 5 to 10, under these conditions, as the thickness $h_1$ of the coating portion 1132 increases, the lithium plating degree in a region not provided with the groove 1121 on the negative active material layer is alleviated, but the volumetric energy density of the secondary battery 100 is increased. In contrast to the circumstance without the coating portion 1132 in Embodiment 4, the coating portions 1132 provided in Embodiments 5 to 10 can alleviate lithium plating. As can be seen from comparison with Embodiment 11, when $h_1$ is greater than 2 $\mu m$, the volumetric energy density of the secondary battery 100 is relatively low, thereby greatly affecting the energy storage capacity of the secondary battery 100. Therefore, when the thickness satisfies $1.5\ \mu m \leq h_1 \leq 2\ \mu m$, lithium plating can be alleviated without much impairing the volumetric energy density of the secondary battery 100.

A person of ordinary skill in the art understands that the foregoing embodiments are merely intended to illustrate this application, but not intended to limit this application. Any and all appropriate modifications and changes made to the embodiments without departing from the essence of this application still fall within the protection scope of this application.

**Claims**

1. A secondary battery, comprising an electrode assembly, **characterized in that** the electrode assembly comprises a first electrode plate, a second electrode plate, and a separator; the first electrode plate comprises a first current collector and a first active material layer; the first active material layer is disposed on at least one surface of the first current collector along a thickness direction of the first current collector; the second electrode plate comprises a second current collector and a second active material layer; the second active material layer is disposed on at least one surface of the second current collector along a thickness direction of the second current collector; the separator is disposed between the first active material layer and the second active material layer; the first active material layer is provided with a groove; the groove comprises a groove opening and a groove wall; along a thickness direction of the first electrode plate, the groove opening faces toward the separator; another side of the separator facing the groove opening corresponds to the second active material layer; the first electrode plate further comprises a filler, and the filler comprises a filling portion; the filling portion is located in the groove, and the filling portion covers at least a part of the groove wall.

2. The secondary battery according to claim 1, **characterized in that** the filler is made of a material comprising at least one of a ceramic material or a resin material.

3. The secondary battery according to claim 2, **characterized in that** the ceramic material is at least one selected from aluminum oxide, boehmite, titanium oxide, magnesium oxide, calcium oxide, or zirconium oxide.

4. The secondary battery according to claim 2, **characterized in that** the resin material is at least one selected from polyimide, polytetrafluoroethylene, or polyvinyl butyral.

5. The secondary battery according to claim 2, **characterized in that** the material of the filler further comprises a binder.

6. The secondary battery according to claim 1, **characterized in that** an internal space volume of the groove is $V_1$, and a volume of the filling portion is $V_2$, satisfying: $0.6V_1 \leq V_2 \leq V_1$.

7. The secondary battery according to claim 6, **characterized in that** $0.9V_1 \leq V_2 \leq V_1$.

8. The secondary battery according to any one of claims 1 to 7, **characterized in that** the filler is fully disposed inside the groove.

9. The secondary battery according to any one of claims 1 to 7, **characterized in that** the filler further comprises a coating portion, and the coating portion is disposed in a region on a side of the first active material layer, wherein the region is not provided with the groove, and the side faces toward the separator.

10. The secondary battery according to claim 9, **characterized in that** the coating portion and the filling portion are integrally formed.

11. The secondary battery according to claim 9, **characterized in that** along a thickness direction of the first electrode plate, a thickness of the coating portion is $h_1$, satisfying $0.5~\mu m \leq h_1 \leq 2~\mu m$.

12. The secondary battery according to claim 1, **characterized in that** along a thickness direction of the first electrode plate, a thickness of the first active material layer at a position not provided with the groove is $H_1$, and a depth of the groove is $H_2$, satisfying: $H_1/4 \leq H_2 \leq H_1/2$.

13. The secondary battery according to claim 1, **characterized in that** the first electrode plate is a negative electrode plate.

14. A secondary battery manufacturing method, applicable to manufacturing the secondary battery according to any one of claims 1 to 13, **characterized in that** the method comprises following steps:

   filling: filling the groove with the filler;
   stacking: stacking the separator and the second electrode plate on the first electrode plate sequentially along a thickness direction of the first electrode plate such that the separator is located between the first active material layer and the second electrode plate.

15. The secondary battery manufacturing method according to claim 14, **characterized in that** the filling step comprises:

   coating: applying a filler slurry to one side, facing toward the separator, of the first active material layer; and
   leveling: letting the applied filler slurry flow into the groove.

**16.** The secondary battery manufacturing method according to claim 15, **characterized in that** the filling step further comprises:
curing: curing the filler slurry to form the filler.

**17.** An electrical device, **characterized in that** the electrical device comprises the secondary battery according to any one of claims 1 to 13.

100

FIG. 1

FIG. 2

11

1121    113(1131)    111a

112

111

112

113(1131)    111b

X

FIG. 3

1121    1121a    L

112    1121b

FIG. 4

EP 4 773 282 A1

FIG. 5

FIG. 6

FIG. 7

1000

FIG. 8

**TRANSLATION**

### INTERNATIONAL SEARCH REPORT

| International application No. |
| --- |
| **PCT/CN2025/103413** |

| A. | CLASSIFICATION OF SUBJECT MATTER |
| --- | --- |

H01M10/0525(2010.01)i; H01M50/474(2021.01)i; H01M50/483(2021.01)i; H01M50/486(2021.01)i

According to International Patent Classification (IPC) or to both national classification and IPC

| B. | FIELDS SEARCHED |
| --- | --- |

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: 电池, 负极, 活性物质层, 凹, 槽, 填充, 树脂, 陶瓷, 锂枝晶, battery, negative electrode, active material layer, recess, groove, fill, resin, ceramic, lithium dendrite

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 119092795 A (NINGDE AMPEREX TECHNOLOGY LTD.) 06 December 2024 (2024-12-06) <br> description, paragraphs 3-197, and figures 1-8 | 1-17 |
| X | JP 2009205903 A (TOYOTA MOTOR CORP. et al.) 10 September 2009 (2009-09-10) <br> description, paragraphs 8-77, and figures 1-3 | 1-8, 12-17 |
| Y | JP 2009205903 A (TOYOTA MOTOR CORP. et al.) 10 September 2009 (2009-09-10) <br> description, paragraphs 8-77, and figures 1-3 | 9-11 |
| Y | CN 110993890 A (DONGGUAN VEKEN BATTERY CO., LTD.) 10 April 2020 (2020-04-10) <br> description, paragraphs 8-86, and figures 1-2 | 9-11 |
| Y | CN 109755557 A (SOUNDON NEW ENERGY TECHNOLOGY CO., LTD.) 14 May 2019 (2019-05-14) <br> description, paragraphs 7-24 | 9-11 |
| X | CN 117457857 A (HUIZHOU LIWINON NEW ENERGY TECHNOLOGY CO., LTD.) 26 January 2024 (2024-01-26) <br> description, paragraphs 4-44, and figures 4-5 | 1-3, 5, 8, 13, 17 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **21 September 2025** | **23 September 2025** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

# EP 4 773 282 A1

## INTERNATIONAL SEARCH REPORT

International application No.

**PCT/CN2025/103413**

### C.    DOCUMENTS CONSIDERED TO BE RELEVANT

| Category* | Citation of document, with indication, where appropriate, of the relevant passages | Relevant to claim No. |
|---|---|---|
| A | CN 109768223 A (HUBEI LINNOVA NEW ENERGY TECHNOLOGY CO., LTD.) 17 May 2019 (2019-05-17) entire document | 1-17 |

Form PCT/ISA/210 (second sheet) (July 2022)

**INTERNATIONAL SEARCH REPORT**
Information on patent family members

International application No.

**PCT/CN2025/103413**

| Patent document cited in search report | | | Publication date (day/month/year) | Patent family member(s) | | | Publication date (day/month/year) |
|---|---|---|---|---|---|---|---|
| CN | 119092795 | A | 06 December 2024 | None | | | |
| JP | 2009205903 | A | 10 September 2009 | None | | | |
| CN | 110993890 | A | 10 April 2020 | CN | 110993890 | B | 08 November 2022 |
| CN | 109755557 | A | 14 May 2019 | None | | | |
| CN | 117457857 | A | 26 January 2024 | None | | | |
| CN | 109768223 | A | 17 May 2019 | None | | | |

Form PCT/ISA/210 (patent family annex) (July 2022)